# EUROPEAN PATENT APPLICATION

(11) **EP 0 853 097 A1**
(43) Date of publication of application: **15.07.1998**
(21) Application number: 98100407.0
(22) Date of filing: 12.01.1998
(51) Int. Cl.: C08L 29/14, C09J 129/14

(54) **Polymer composition suitable as resilient flooring or welding rod**

(30) Priority: 13.01.1997 US 782131
(71) Applicant: Armstrong World Industries, Inc., Lancaster Pennsylvania 17604 (US)
(72) Inventor: Ward, Harry D., Lancaster, PA 17601 (US); West, Lowell E., Elizabethtown, PA 17022 (US)
(74) Representative: Finck, Dieter, Dr.Ing.

(57) **Abstract**

A thermoplastic polymer composition that can be extruded is polyvinyl butyral and a polymer having a polar moiety which can hydrogen bond with the polyvinyl butyral. The polymer having the polar moiety is present at an amount in the range of from about 3 to about 25% by weight based on the combined weight of the polyvinyl butyral and the polymer with the polar moiety. The composition is sufficiently nonsticking that it can be extruded and calendered without substantial adherence to hot metal parts. The composition is suitable as resilient flooring or welding rods.

## Description

This invention relates to a thermoplastic blend which can be extruded as a welding rod for resilient flooring or processed to form resilient flooring and the thermoplastic polymer composition advantageously does not stick to the hot metal parts. As a welding rod, the thermoplastic composition is, in fact, heated and welded between two pieces of resilient sheet flooring to form a water-tight, sealed assembly.

Thermoplastic polymers and blends thereof are popular materials to use when making resilient flooring and welding rods. The use of such materials is, however, limited since processing requirements necessitate that the thermoplastics be processed with hot metal parts. Many thermoplastic polymers and compositions stick to hot metal parts and either cause problems in processing such as caking and build-up of the polymer on the metal, or are so prone to sticking on metal that such materials cannot be processed at all.

Polyvinyl chloride, for example, is popular for such items as welding rods and resilient flooring. Formulations of polyvinyl chloride can easily be extruded and calendered without stik-king to hot metal parts.

The selection of polymers and compositions which can be extruded and processed with hot metal parts without the severe caking and build-up of the polymer on the metal parts, however, is limited. It would be advantageous to develop a thermoplastic composition which can be processed with hot metal parts and extruded without such severe problems. It would be further advantageous to develop such thermoplastic compositions which can provide resilient flooring and welding rods.

It is an object of the present invention to provide an easily extrudable thermoplastic composition which is also suitable as welding rods and resilient flooring. The present invention also provides compositions having suitably high tensile strength, good for flooring and welding rods.

The invention refers to a thermoplastic polymer composition capable of being extruded comprising polyvinyl butyral (PVB) and a polymer which has a polar moiety which is effective to hydrogen bond with the polyvinyl butyral wherein the polymer with the polar moiety is present at an amount in the range of from about 3 to about 25% by weight based on the combined weight of the polyvinyl butyral and the polymer with the polar moitey; wherein further, the composition is sufficiently non-sticking that it can be extruded and calendered without substantial adherence to any hot metal parts. Substantial stikking to hot metal parts prevents processing into sheet material and also prevents use as a welding rod. While some slight sticking is acceptable, and even desirable to allow calendering, it is undesired to have so much sticking that the polymer composition builds up on the metal parts.

Slight sticking (also known as roll tack) is needed for processing the compositions, particularly into floor covering sheets, but sticking which builds up composition residue is undesired. A slight residue build-up which does not interfere with processing and which can be cleaned off periodically can be tolerated and such compositions are suitable for use, although it is preferred to use a composition that leaves no residue. As can be appreciated from the examples provided herein, substantial sticking and build-up of residue which interferes with product production can be avoided by implementation of the present invention.

Since this thermoplastic polymer composition does not stick to hot metal parts, the composition is more than suitable as resilient flooring and welding rods. The present compositions can be used in any of the conventional processes for preparing such resilient flooring or welding rods.

The compositions described herein can be used in any conventional process to form the composition into resilient floor covering sheets or welding rods; such processes, for example, are the processes presently used to form polyvinyl chloride into the floor covering sheets or welding rods. To prepare the flooring, for example, the composition is extruded into a sheet and then transferred to heated rolls. To prepare a welding rod, the composition can either be molded into a rod or extruded. Processes for the preparation of such articles are well known for both applications.

The welding rods are used to join sheets of surface coverings. Sheets of surface coverings can be welded together by placing the sheets together so that two edges abut. The abutting edges are then routed. A welding rod is placed into the routed groove, and the rod melted so that the thermoplastic polymer composition fills the groove. The shape of the groove is not critical. It may, for example, be U-shaped or pentagonal.

As previously indicated, the polar moiety containing polymer is present in an amount of from about 3 to about 25% by weight (wt.) based on the combination of the PVB and polar-moiety containing polymer. To prepare either resilient floor covering sheets or welding rods, it is preferred that the polar moiety containing polymer be present at an amount in the range of from about 5 to about 18% by wt. based on the weight of the combination of the PVB and the polymer.

The polar moiety must also be present at an amount effective to provide a sufficient number of polar bonds to the PVB in order to decrease sticking (tack) to the acceptable minimum for flooring processing or to eliminate tack to permit extrusion. Suitably the polar moiety is present in the polar-moiety containing polymer at a minimum amount of about 3% by wt. of the polar-moiety containing polymer, and preferably the polar moiety is present at a minimum amount of about 8% by wt. The maximum amount of the polar moiety is not critical. A preferred range for the presence of the polar moiety in the polymer is from about 8 to about 98% by wt.

The polar moiety of the polar-moiety containing polymer must be able to hydrogen bond with the PVB. Suitable polar-moiety containing polymers have as a moiety, at least one member of the group consisting of: an acidic moiety, a ketone, an ester, a hydroxyl group, a neutralized acid, a urethane, an amine, and an amide. Any polymer which contains one or more of these moieties can be used. Suitable polar-moiety containing polymers can be selected from the group consisting of polyethylene methacrylic acid, the partial metal salt of polyethylene methacrylic acid, polyethylene acrylic acid, polyethylene vinyl acetate, polyamide, polyamine, a thermoplastic urethane, polyvinyl alcohol, polyethylene carbon monoxide, and mixtures thereof.

For the welding rod and resilient floor-covering sheet, the hydrogen bonded blend of the polyvinyl butyral can suitably be present at a minimum amount of about 20% by weight. It is, however, preferred to have at least 65% by weight of the hydrogen bonded blend of the PVB and the polar-moiety containing polymer present in the composition. Suitably, however, especially when the composition is to be used for other applications, the reacted blend of the polar moiety containing polymer and the PVB can be present at a minimum amount of about 20% by weight of the total composition.

One or more additives can also be used with the compositions of the present invention. The composition, for example, can include a plasticizer, pigments, processing aids, filler and non-polar moiety containing polymers which would not cause sticking to hot metal parts. Such polymers which can be added include ethylene/propylene polymer rubber, polyolefin, polyethylene terephthalate, and polyether ketone. Preferred polyolefins are polyethylene and polypropylene. A preferred ethylene/propylene polymer rubber is ethylene/propylene/diene copolymer rubber. A preferred ethylene/propylene/diene copolymer rubber is ethylene propylene/1,4-hexadiene rubber. In a preferred embodiment for welding rods, there is no filler in the composition with the hydrogen-bonded composition.

Such polymers can acceptably be used at an amount up to about 50% of the composition providing that their inclusion will not destroy the property of non-sticking to hot metal parts. Preferably such polymers are included at an amount up to about 35% by wt. of the composition, especially for the welding rod and resilient floor-covering sheet.

This invention may be better understood from the following examples. In the examples, all parts and percentages are by weight unless otherwise indicated.

### EXAMPLES

### Procedure:

Compositions were prepared and tested for sticking on a two roll mill. Each example shows the ingredients and amounts. Examples 1-13 show compositions of the present invention. Examples 14-17 show the results of mixing a similar polymer with PVB but the polymer is non-polar and is not capable of hydrogen bonding and so does not form a suitably non-sticking composition.

The compositions were prepared by melt mixing the ingredients together in a mixer to form a homogeneous blend. The blend was then put on a two-roll mill to be formed into a sheet material. In each example the temperature of each roll is indicated. Comments are also given in each example for the amount and condition of: 1) roll tack and 2) the residue on the roll.

A doctor blade was used on the two roll mill for the removal of the sample. For samples with acceptable tack (stick), the blade was needed to merely initiate removal. For more than acceptable tack, the blade was needed for actual removal.

### Example 1

In this example the polymer blend was 99% by wt. (297g) PVB (containing plasticizer and stabilizers from Monsanto) and 1% by wt. (3g) polyethylene vinyl acetate (Elvax from Dupont); 700 grams (g) of limestone was used as a filler. On the two roll mill, the fast roll was set at 143°C (290°F) and the slow roll was set at 152°C (305°F).

It was noted that this sample stuck to the roll so that the blade could just barely remove the sample. The performance was acceptable. The composition can be extruded but was marginal for calendering.

### Example 2

In this example the polymer blend was 95% by wt. (285g) PVB (containing plasticizer and stabilizer from Monsanto) and 5% by wt. (15g) polyethylene vinyl acetate (Elvax from Dupont); 700 grams (g) of limestone was used as a filler. On the two roll mill, the fast roll was set at 143°C (290°F) and the slow roll was set at 152°C (305°F).

It was noted that this sample's performance was acceptable. It was removable from the roll with the blade, and so when the blade was used the sample came off easily over the blade. The composition can be extruded or calendered with hot metal parts.

### Example 3

In this example the polymer blend was 90% by wt. (270g) PVB (containing plasticizer and stabilizer from Monsanto) and 10% by wt. (30g) polyethylene vinyl acetate (Elvax from Dupont); 700 grams (g) of limestone was used as a filler. On the two roll mill, the fast roll was set at 143°C (290°F) and the slow roll was set at 154°C (310°F).

It was noted that this sample's performance was acceptable. It was removable from the roll with the blade, and so when the blade was used the sample came off easily over the blade. The composition could be calendered or extruded with hot metal parts.

### Example 4

In this example the polymer blend was 80% by wt. (240g) PVB (containing plasticizer and stabilizer from Monsanto) and 20% by wt. (60g) polyethylene vinyl acetate (Elvax from Dupont); 700 grams (g) of limestone was used as a filler. On the two roll mill, the fast roll was set at 143°C (290°F) and the slow roll was set at 152°C (305°F).

It was noted that this sample's performance was acceptable. The composition can be calendered or extruded into resilient flooring and welding rods using hot metal parts. It was removable from the roll with the blade, and so when the blade was used the sample came off easily over the blade.

### Example 5

In this example the polymer blend was 97% by wt. (853g) PVB (containing plasticizer and stabilizer from Monsanto) and 3% by wt. (26g) polyethylene acrylic acid (Primacor from Dow); 1298 grams (g) of limestone was used as a filler, and 22 g of TiO₂ was added. On the two roll mill, the slow roll was set at 106°C (223°F) and the fast roll was set at 111°C (232°F).

It was noted that this sample's performance was acceptable. It was removable from the roll with the blade, but not cleanly. There was a slight residue which would require some periodic cleaning. Nevertheless, the performance was acceptable and could be used for resilient flooring or for a welding rod and the composition could be extruded or calendered with hot metal parts.

### Example 6

In this example the polymer blend was 95% by wt. (836g) PVB (containing plasticizer and stabilizer from Monsanto) and 5% by wt. (44g) polyethylene acrylic acid (Primacor from Dow); 1298 grams (g) of limestone was used as a filler and 22 g of TiO₂ was added. On the two roll mill, the slow roll was set at 107°C (225°F) and the fast roll was set at 113°C (235°F).

It was noted that this sample's performance was acceptable. There was some sticking, but it was removable from the roll with the blade. It should be noted that some sticking is desired to be able to make resilient flooring. Accordingly, the performance was good and in this case there was no residue of the polymer composition left on the roll.

The composition could be extruded or calendered using hot metal parts.

### Example 7

In this example the polymer blend was 90% by wt. (792g) PVB (containing plasticizer and stabilizer from Monsanto) and 10% by wt. (88g) polyethylene acrylic acid (Primacor from Dow); 1298 grams (g) of limestone was used as a filler and 22 g of TiO₂ was added. On the two roll mill, the slow roll was set at 109°C (228°F) and the fast roll was set at 113°C (235°F).

It was noted that this sample's performance was acceptable. There was some sticking, but it was removable from the roll with the blade. It should be noted that some sticking is desired to be able to make resilient flooring. Accordingly, the performance was good and in this case there was only a little residue of the polymer composition left on the roll.

The composition can be extruded and calendered into resilient flooring or welding rods using hot metal parts.

### Example 8

In this example the polymer blend was 85% by wt. (748g) PVB (containing plasticizer and stabilizer from Monsanto) and 15% by wt. (132g) polyethylene acrylic acid (Primacor from Dow); 1298 grams (g) of limestone was used as a filler and 22 g of TiO₂ was added. On the two roll mill, the slow roll was set at 108°C (227°F) and the fast roll was set at 115°C (238°F).

It was noted that this sample's performance was acceptable. There was some sticking, but it was removable from the roll with the blade. It should be noted that some sticking is desired to be able to make resilient flooring. Accordingly, the performance was good and in this case there was only a little residue of the polymer composition left on the roll. The composition could be extruded or calendered with hot metal parts.

### Example 9

In this example the polymer blend was 97% by wt. (853g) PVB (containing plasticizer and stabilizer from Monsanto) and 3% by wt. (26g) of the partially neutralized salt of polyethylene methacrylic acid (Surlyn 8920 from Dupont); 1298 grams (g) of limestone was used as a filler and 22 g of TiO₂ was added. On the two roll mill, the slow roll was set at 109°C (229°F) and the fast roll was set at 115°C (238°F).

It was noted that this sample's performance was acceptable. There was some sticking, but it was cleanly removable from the roll with the blade. There was no residue on the roll and thus the performance was ideal for extrusion or calendering into resilient flooring.

### Example 10

In this example the polymer blend was 95% by wt. (836g) PVB (containing plasticizer and stabilizer from Monsanto) and 5% by wt. (44g) of the partially neutralized salt of polyethylene methacrylic acid (Surlyn 8920 from Dupont); 1298 grams (g) of limestone was used as a filler and 22 g of TiO₂ was added. On the two roll mill, the slow roll was set at 110°C (230°F) and the fast roll was set at 116°C (239°F).

It was noted that this sample's performance was acceptable. There was sticking, but it was removable from the roll with the blade. It should be noted that some sticking is desired to be able to make resilient flooring or a welding rod using extrusion or calendering. In this case there was residue of the polymer composition left on the roll, and the roll would, therefore, require cleaning.

### Example 11

In this example the polymer blend was 90% by wt. (792g) PVB (containing plasticizer and stabilizer from Monsanto) and 10% by wt. (88g) of the partially neutralized salt of polyethylene methacrylic acid (Surlyn 8920 from Dupont); 1298 grams (g) of limestone was used as a filler and 22 g of TiO₂ was added. On the two roll mill, the slow roll was set at 109°C (229°F) and the fast roll was set at 115°C (238°F).

It was noted that this sample's performance was acceptable. There was some sticking, but it was cleanly removable from the roll with the blade. There was no residue on the roll and thus the performance was ideal for extrusion or calendering with hot metal parts into resilient flooring.

### Example 12

In this example the polymer blend was 95% by wt. (836g) PVB (containing plasticizer and stabilizer from Monsanto) and 5% by wt. (44g) of polyethylene methacrylic acid (Nucrel 410 from Dupont); 1298 grams (g) of limestone was used as a filler and 22 g of TiO₂ was added. On the two roll mill, the slow roll was set at 110°C (231°F) and the fast roll was set at 116°C (240°F).

It was noted that this sample's performance was acceptable. There was some sticking, but the polymer composition was easily removed from the roll, leaving a slight residue. It should be noted that some sticking is desired to be able to make resilient flooring. In this case there was only a little residue of the polymer composition left on the roll, and the roll would, therefore, require periodic cleaning.

### Example 13

In this example the polymer blend was 90% by wt. (792g) PVB (containing plasticizer and stabilizer from Monsanto) and 10% by wt. (88g) of polyethylene methacrylic acid (Nucrel 410 from Dupont); 1298 grams (g) of limestone was used as a filler and 22 g of TiO₂ was added. On the two roll mill, the slow roll was set at 111°C (232°F) and the fast roll was set at 117°C (242°F).

It was noted that this sample's performance was acceptable. There was some sticking, but the polymer composition was easily removed from the roll, leaving no residue. It should be noted that some sticking is desired to be able to make resilient flooring. In this case there was no residue left on the roll, and the roll would, therefore, require no cleaning.

### Comparative Example 14

This example shows the use of a polymer which had no polar groups for hydrogen bonding with the PVB.

In this example the polymer blend was 97% by wt. (297g) PVB (containing plasticizer and stabilizer from Monsanto) and 1% by wt. (3g) polyethylene (Attane from Dow); 700 grams (g) of limestone was used as a filler. On the two roll mill, the fast roll was set at 149°C (300°F) and the slow roll was set at 160°C (320°F).

It was noted that this sample's performance was not acceptable. There was too much sticking for the processing of the composition.

### Comparative Example 15

This example shows the use of a polymer which had no polar groups for hydrogen bonding with the PVB.

In this example the polymer blend was 95% by wt. (285g) PVB (containing plasticizer and stabilizer from Monsanto) and 5% by wt. (15g) polyethylene (Attane from Dow); 700 grams (g) of limestone was used as a filler. On the two roll mill, the fast roll was set at 149°C (300°F) and the slow roll was set at 160°C (320°F).

It was noted that this sample's performance was not acceptable. There was too much sticking for the processing of the composition.

### Comparative Example 16

This example shows the use of a polymer which had no polar groups for hydrogen bonding with the PVB.

In this example the polymer blend was 90% by wt. (270g) PVB (containing plasticizer and stabilizer from Monsanto) and 10% by wt. (30g) polyethylene (Attane from Dow); 700 grams (g) of limestone was used as a filler. On the two roll mill, the fast roll was set at 149°C (300°F) and the slow roll was set at 160°C (320°F).

It was noted that this sample's performance was not acceptable. There was too much sticking for the processing of the composition.

### Comparative Example 17

This example shows the use of a polymer which had no polar groups for hydrogen bonding with the PVB.

In this example the polymer blend was 60% by wt. (240g) PVB (containing plasticizer and stabilizer from Monsanto) and 20% by wt. (60g) polyethylene (Attane from Dow); 700 grams (g) of limestone was used as a filler. On the two roll mill, the fast roll was set at 149°C (300°F) and the slow roll was set at 160°C (320°F).

It was noted that this sample's performance was not acceptable. There was too much sticking for the processing of the composition in processes like extrusion and calendering with hot metal parts.

## Claims

1. A composition capable of being extruded comprising polyvinyl butyral and a polymer which contains a polar moiety which is effective to form a hydrogen bond with the polyvinyl butyral, wherein the polymer having the polar moiety is present at an amount in the range of from about 3 to about 25% by weight based on the weight of the polyvinyl butyral and the polymer having the polar moiety combined, wherein further the composition is sufficiently non-sticking that it can be extruded and calendered without substantial adherence to hot metal parts.

2. The composition of claim 1 which also contains an ethylene/propylene polymer rubber at an amount up to about 50% by weight of the composition.

3. The composition of claim 2 wherein the ethylene/propylene polymer rubber is an ethylene/propylene/diene copolymer rubber.

4. The composition of claim 1 wherein the polar moiety is an acidic moiety.

5. The composition of claim 1 wherein the polymer having the polar moiety is selected from the group consisting of: polyethylene methacrylic acid, the partial metal salt of polyethylene methacrylic acid, polyethylene acrylic acid, polyethylene vinyl acetate, polyamide, polyamine, a thermoplastic urethane, polyvinyl alcohol, polyethylene carbon monoxide, and mixtures thereof.

6. The composition of claim 5 wherein the polymer is a polyethylene methacrylic acid.

7. The composition of claim 1 which further contains at least one member selected from the group consisting of: a plasticizer, a pigment, an antioxidant, a processing aid, filler and a non-reactive polymer which would not cause sticking to hot metal parts.

8. The composition of claim 7 which contains the non-reactive polymer at an amount up to about 50% by wt.

9. The composition of claim 7 which contains the non-reactive polymer at an amount up to about 35% by wt.

10. The composition of claim 1 wherein the composition has an amount of at least about 20% by weight of the polyvinyl butyral and the polymer having the polar moiety combined.

11. A welding rod for a surface covering comprising polyvinyl butyral and a polymer which contains a polar moiety which is effective to form a hydrogen bond with the polyvinyl butyral, wherein the polymer having the polar moiety is present at an amount in the range of from about 3 to about 25% by weight based on the weight of the polyvinyl butyral and the polymer having the polar moiety combined, wherein further the composition is sufficiently non-sticking that it can be extruded and calendered without substantial adherence to hot metal parts.

12. The welding rod of claim 11 wherein further the composition contains an ethylene/propylene polymer rubber at an amount up to about 50% by weight of the composition.

13. The welding rod of claim 11 wherein further the composition contains a non-reactive polymer at an amount up to about 35% by weight of the compositon.

14. The welding rod of claim 11 wherein the composition further includes a plasticizer, pigments, processing aids, filler and a non-reactive polymer which would not cause sticking to hot metal parts.

15. The welding rod of claim 11 wherein the composition has an amount of at least about 20% by weight of the polyvinyl butyral and the polymer having the polar moiety combined.

16. A surface covering comprising a composition which comprises polyvinyl butyral and a polymer which contains a polar moiety which is effective to form a hydrogen bond with the polyvinyl butyral, wherein the polymer having the polar moiety is present at an amount in the range of from about 3 to about 25% by weight based on the weight of the polyvinyl butyral and the polymer having the polar moiety combined, wherein further, the composition is sufficiently non-sticking that it can be extruded and calendered without substantial adherence to hot metal parts.

17. The surface covering of claim 16 wherein further the composition contains an ethylene/propylene polymer rubber at an amount up to about 50% by weight of the composition.

18. The surface covering of claim 16 wherein further the composition contains a non-reactive polymer at an amount up to about 35% by weight of the composition.

19. The surface covering of claim 16 wherein the composition further includes a plasticizer, pigments, processing aids, filler and a non-reactive polymer which would not cause sticking to hot metal parts.

20. The surface covering of claim 16 wherein the composition has an amount of at least about 20% by weight of the polyvinyl butyral and the polymer having the polar moiety combined.
